# EUROPÄISCHE PATENTSCHRIFT

(11) **EP 2 033 940 B1**
(45) Veröffentlichungstag und Bekanntmachung des Hinweises auf die Patenterteilung: **01.07.2015**
(21) Anmeldenummer: 08105026.2
(22) Anmeldetag: 12.08.2008
(51) Int. Cl.: C02F 1/44, C02F 1/02, C02F 1/52, C02F 1/72, C02F 1/32, C02F 3/28, C02F 9/00, C02F 103/32

(54) **Reinigung von Olivenölabwässern mittels mechanischen, chemischen und biologischen Verfahren**
Cleaning of olive oil waste waster with mechanical, chemical and biological methods
Nettoyage de margines d'huiles d'olives à l'aide de procédés mécanique, chimique et biologique

(30) Priorität: 07.09.2007 AT 14032007
(43) Veröffentlichungstag der Anmeldung: 11.03.2009
(73) Patentinhaber: M-U-T MASCHINEN-UMWELTTECHNIK- TRANSPORTANLAGEN GESELLSCHAFT M.B.H., A-2000 Stockerau (AT)
(72) Erfinder: Domnanovich, Alexander Martin, 1100, Wien (AT)
(74) Vertreter: Müllner, Martin

(56) Entgegenhaltungen:
- EP-A2- 1 167 305
- WO-A1-2005/123603
- AT-A1- 501 991
- US-A1- 2006 070 953
- BECCARI M ET AL: "INTEGRATED TREATMENT OF OLIVE OIL MILL EFFLUENTS: EFFECT OF CHEMICAL AND PHYSICAL PRETREATMENT ON ANAEROBIC TREATABILITY", WATER SCIENCE & TECHNOLOGY, I W A PUBLISHING, GB, Bd. 40, Nr. 1, 23. September 1998 (1998-09-23), Seiten 347-355, XP001032801, ISSN: 0273-1223, DOI: 10.1016/S0273-1223(99)00383-2

## Beschreibung

### Technisches Gebiet

Die vorliegende Erfindung betrifft ein Verfahren zur Reinigung von Abwässern aus der Olivenölproduktion, bei dem das Abwasser einer Flockung, vorzugsweise durch Ca(OH)₂, unterworfen, anschließend einer Ultra- oder Nanofiltration und schließlich einer Umkehrosmose unterworfen wird.

Solches Olivenölabwasser entsteht in 3-Phasen Dekantern in Olivenölpressen zumeist in der Erntesaison von September/Oktober bis Jänner/Februar. Das Abwasser stellt derzeit aufgrund der biologischen Resistenz in den betroffenen Ländern eine Umweltgefahr dar.

### Stand der Technik

In der AT 501991 A (ADLER) 15.12.2006 ist ein mechanisch/chemisches Abwasserreinigungsverfahren beschrieben, welches ebenfalls Olivenölabwasser aus dem 3-Phasen-Dekantersystem reinigt. Jedoch ist es - im Gegensatz zu den Angaben in dieser Schrift - aufgrund des hohen Anteils von niedermolekularen Inhaltsstoffen, insbesondere von Alkoholen und Fettsäureestern, idR nicht möglich, das Abwasser auf einen CSB-Wert von unter 250 mg O₂/I zu reinigen, da diese die Umkehrosmosemembrane ungehindert passieren können.

Niedermolekulare Organika entstehen aufgrund schwacher biologischer anaerober Aktivitäten im Abwasser während der Lagerung im Becken bzw. in Lagunen bzw. sind Bestandteil der Oliven selbst.

### Darstellung der Erfindung

Es ist Aufgabe der vorliegenden Erfindung, das Abwasser so weit zu reinigen, dass der Eingangs-Chemische Sauerstoffbedarf (CSB) von bis zu 160.000 mg O₂/I nach der Reinigung die lokalen Grenzwerte von unter 250 mg O₂/I bzw. 150 mg O₂/I (länderspezifisch) mit Sicherheit erreicht.

Aufgrund des hohen Anteils an hemmenden sowie inerten organischen und anorganischen gelösten und ungelösten Inhaltsstoffen im Abwasser ist eine rein biologische Reinigung nicht möglich, da diese zu langsam erfolgen würde. Daher ist eine Kombination aus chemischen, mechanischen und biologischen Reinigungsschritten von Nöten.

Die gestellte Aufgabe wird durch ein Verfahren der eingangs genannten Art erfindungsgemäß dadurch gelöst, dass man in einem ersten Schritt das Abwasser zumindest zwei bis drei Monate lang absetzen lässt und dass man das gereinigte Abwasser einer Oxidation, vorzugsweise einer UV-Wasserstoffperoxid-Oxidation, unterwirft.

Durch diese beiden einfachen zusätzlichen Schritte kann man zuverlässig die vorgeschriebenen CSB-Werte erreichen.

In vielen Fällen werden aber wegen des hohen CSB-Gehaltes vor der Oxidation zu hohe Betriebskosten während der Oxidation entstehen.

Nach einem weiteren Merkmal der Erfindung ist daher vorgesehen, dass man das Abwasser nach der Ultra- oder Nanofiltration oder nach der Umkehrosmose in einem Anaerob-Reaktor behandelt, um niedermolekulare Substanzen, die die Umkehrosmose passieren können, abzubauen.

Alternativ dazu (oder auch zusätzlich) kann man das Abwasser nach der Umkehrosmose auf über 65° erhitzen, um z.B. Methanol auszutreiben, wobei es günstig ist, danach das Abwasser auf über 78° zu erhitzen, um z.B. Ethanol auszutreiben.

Auf diese Weise kann man die Kosten für den letzten Schritt, die Oxidation, deutlich reduzieren.

Bisher wurde immer der Weg der Flüssigphase (Überstand) beschrieben. D.h. nach dem Absetzen wird die Flüssigphase ausgeflockt. Die Flüssigphase nach dem Ausflocken wird der Ultra- oder Nanofiltration unterworfen. Der in diesen Schritten anfallende Schlamm kann in Kammerfilterpressen aufkonzentriert werden, die in den Kammerfilterpressen abgepresste Flüssigkeit wird in das zweite Absetzbecken rückgeführt.

Das Permeat der Ultra- oder Nanofiltration wird - gegebenenfalls nach der Anaerob-Behandlung - der Umkehrosmose zugeführt. Das Permeat der Umkehrosmose wird dann - gegebenenfalls nach dem Erhitzen oder der Anaerobehandlung - oxidiert. Das Retentat der Umkehrosmose kann neuerlich der Ultra- oder Nanofiltration zugeführt werden.

Das Retentat der Ultra- oder Nanofiltration kann teilweise neuerlich derselben Ultra- oder Nanofiltration unterworfen werden, sodass eine Aufkonzentrierung stattfindet. Damit die Konzentration aber nicht zu stark wird, ist nach einer weiteren Ausgestaltung der Erfindung vorgesehen, dass man das Retentat der Ultra- oder Nanofiltration einer Hochdruck-Umkehrosmose unterwirft und das Retentat der Hochdruck-Umkehrosmose in einem Evaporationsbecken eindickt.

### Kurze Beschreibung der Abbildungen der Zeichnungen

An Hand der beiliegenden Figuren wird das erfindungsgemäße Verfahren näher erläutert.

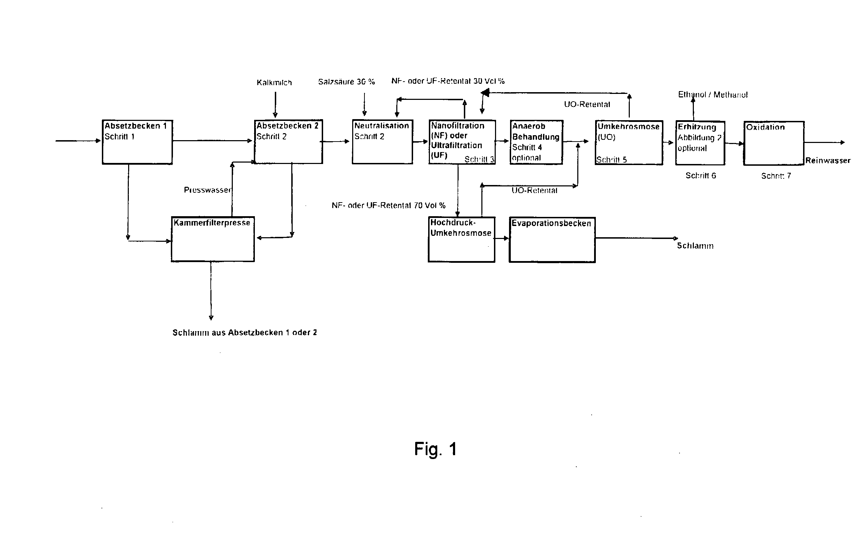

Das gesamte Verfahren ist in Fig. 1 dargestellt; Fig. 2 zeigt das Erhitzen im Detail; und Fig. 3 zeigt die Behandlung des Retentats der Ultra- oder Nanofiltration im Detail.

### Bester Weg zur Ausführung der Erfindung

### 1. Schritt: Absetzen 1. Phase

Das Abwasser aus dem Olivenölherstellungsprozess wird in einem Absetzbecken gesammelt und über mindestens zwei bis drei Monate bzw. über die komplette Saison abgesetzt. Dabei ist es aus ökonomischen Gründen möglich, Abwässer aus verschiedenen Olivenölpressen gemeinsam zu sammeln. Nach dem Absetzen entsteht ca. 40 Vol-% Schlamm, welcher abgepumpt werden muss. Es erfolgt eine CSB-Reduktion auf unter 60000 mg O₂/I.

### 2. Schritt: Absetzen 2. Phase

Der Überstand aus dem ersten Verfahrensschritt "Absetzen 1. Phase" wird mit der Zugabe von Fällungsmittel (aus ökonomischen Gründen vorzugsweise Kalk in Form von Kalkmilch (Ca(OH)₂)) auf einen pH-Wert von über 10,5 erhöht und zwei Tage abgesetzt. Nach dem Absetzen entsteht ca. 30 Vol-% Schlamm, welcher abgepumpt werden muss. Es erfolgt eine CSB-Reduktion auf ca. 50000 mg O₂/I. Wichtig ist es in diesem Schritt, die Schwebstoffe zu entfernen.

Des Weiteren muss der Überstand aus diesem Schritt durch Zugabe von Salzsäure auf pH 7-7,5 neutralisiert werden, um den folgenden Membranen nicht zu schaden.

### 3. Schritt: Ultrafiltration (UF) oder Nanofiltration (NF)

Der Überstand aus Verfahrensschritt 2 wird durch 2 UF-Stufen oder NF-Stufen gepumpt. Es erfolgt eine CSB Reduktion auf ca. 20000 mg O₂/I. Das Retentat kann bis zu einem Drittel in das Neutralisationsbecken zurückgeführt werden und wieder der UF oder NF zugeführt werden.

### 4. Schritt: Anaerobfilter bzw. anaerober Reaktor im Batch-Betrieb

Wichtig in diesem Schritt ist es, die niedermolekularen, leicht abbaubaren Substanzen abzubauen, damit diese nicht die Umkehrosmosemembran passieren und im Umkehrosmosepermeat einen hohen CSB verursachen. Es erfolgt eine CSB Reduktion auf 16000 mg O₂/I.

Dieser Schritt ist optional und kann auch nach Schritt 5 durch Zugabe von Nährstoffen eingesetzt werden.

### 5. Schritt: Umkehrosmose

In diesem Schritt wird das Permeat aus Schritt 4 bzw. - falls dieser nicht vorhanden ist - aus Schritt 3 durch eine einstufige Umkehrosmose-Membran gepumpt. Das Umkehrosmoseretentat mit einem Anteil von ca. 30 Vol-% des Gesamtvolumens wird vor die Nano- oder Ultrafiltrationsstufe gepumpt. Es erfolgt eine CSB-Reduktion auf 1500-3000 mg O₂/I ohne Schritt 4; und eine Reduktion auf 400-800 mg O₂ /I mit Schritt 4.

### 6. Schritt: Erhitzen

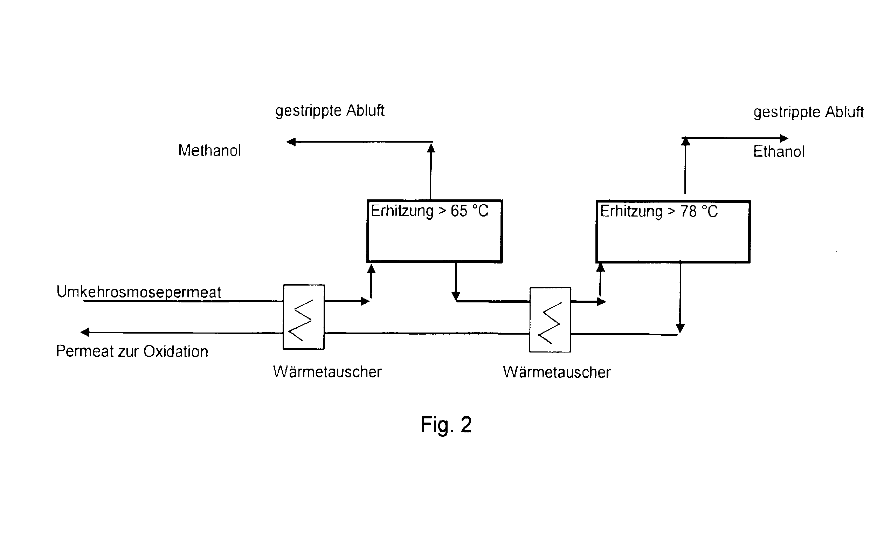

Sollte auf den anaeroben Schritt 4 verzichtet werden, wird das Umkehrosmosepermeat mit einem CSB von über 1500 mg O₂/I in zwei Stufen erhitzt (Fig. 2). In Stufe 1 wird das Permeat auf über 65°C erhitzt, um leichtflüchtige organische Komponenten, wie z.B. Methanol, mit Luft ausstrippen zu können.

In der Stufe 2 wird das Permeat auf über 78°C erhitzt, um leichtflüchtige organische Komponenten, wie z.B. Ethanol, mit Luft ausstrippen zu können.

Um eine Sättigung in der Gasphase über der Flüssigphase zu vermeiden, ist ein Gas/Lufttransfer mit Hilfe eines Ventilators vorteilhaft. Im Zuge der Abkühlung des abgezogenen Prozessgases kondensiert Methanol bzw. Ethanol und kann gesammelt werden.

Um die Wärmeverluste in Grenzen zu halten bzw. rückzugewinnen, wird vor jeder Stufe ein Wärmetauscher eingesetzt, welcher die Wärmeenergie des Ausgangsmediums auf das Eingangsmedium überträgt. Des Weiteren lohnt sich aus betriebswirtschaftlichen Gründen die Erwärmung des Mediums mit Solarkollektoren, da ausreichend Sonnentage im Mittelmeerraum (Schwerpunkt der Olivenölproduktion) vorhanden sind. Es erfolgt eine CSB-Reduktion auf 400 mg O₂/I.

Ob Schritt 6 oder 4 gewählt wird, ist abhängig von den Umständen vor Ort. Sollte z.B. Prozesswärme verfügbar sein, kann sich der Erhitzungsschritt aus betriebswirtschaftlichen Überlegungen lohnen.

### 7. Schritt: Oxidation

Der Rest-CSB wird mittels UV-Wasserstoffperoxid-Oxidationsverfahren auf unter 250 bzw. 150 mg O₂/I, je nach Gesetzeslage, reduziert.

Schritt 6 und Schritt 4 sind nicht zwingend erforderlich, jedoch zu empfehlen, da sonst aufgrund des hohen CSB-Gehaltes vor Schritt 7 zu hohe Betriebskosten während der Oxidation entstehen würden.

### Schlammbehandlung

Der Schlamm aus dem ersten Schritt wird mittels Kammerfilterpresse entwässert, und die Flüssigphase wird ins Absetzbecken des zweiten Schrittes gepumpt.

Der Schlamm aus dem zweiten Schritt wird getrennt ebenfalls mittels Kammerfilterpresse entwässert, und die Flüssigphase wird zurück ins Absetzbecken des zweiten Schrittes gepumpt.

### Nano- oder Ultrafiltrationsretentatbehandlung

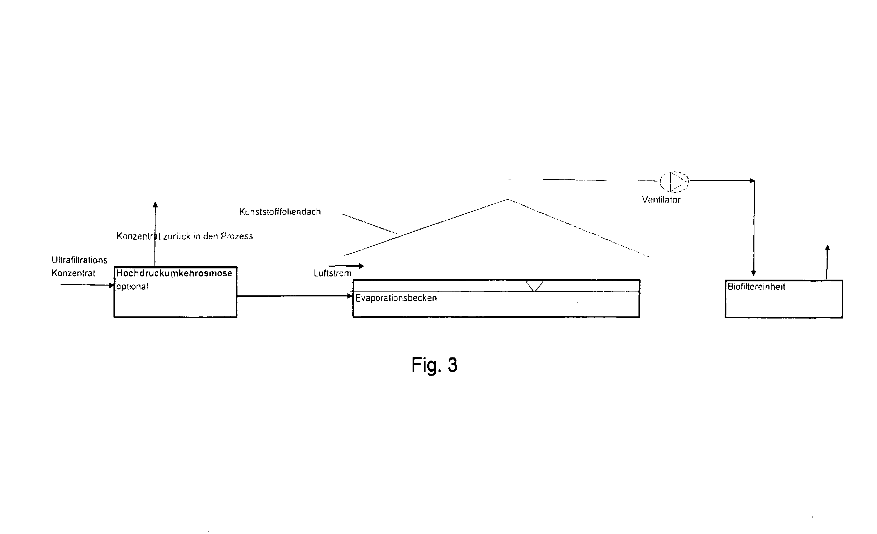

Das Nano- oder Ultrafiltrationsretentat wird mittels Hochdruck-Umkehrosmose (über 60 bar) aufkonzentriert (siehe Fig. 3). Das Permeat wird vor Schritt 5 gepumpt. Das Retentat wird in ein Becken mit einem Oberflächen/Volumenverhältnis von mind. ca. 0,75 m²/m³ gepumpt und dort über mehrere Monate in der Sommerzeit der Evaporation ausgesetzt. (Fig. 3) Aufgrund des erhöhten Anteils an Sonnentagen im Mittelmeerraum kommt es aufgrund der Evaporation zu einer Wassergehaltsreduktion auf 65 bis 70%. Das Becken soll mit durchsichtiger Kunststofffolie abgedeckt sein, um Verdünnung durch Niederschläge zu verhindern. Seitliche Lufteinströmung muss gewährleistet sein. Um eine Sättigung in der Gasphase zwischen Retentat und Folie sowie Gerüche zu verhindern, wird mittels eines Ventilators die Gasphase abgesaugt und einem Biofiltersystem zugeführt. Somit entsteht ein permanenter Luftstrom über dem Retentat, der der Sättigung entgegenwirkt.

Sollte keine Aufkonzentrierung durch eine Hochdruck-Umkehrosmose möglich sein, sind die Evaporationsbecken größer zu dimensionieren.

## Patentansprüche

1. Verfahren zur Reinigung von Abwässern aus der Olivenölproduktion, bei dem das Abwasser einer Flockung, vorzugsweise durch Ca(OH)₂, unterworfen, anschließend einer Ultra- oder Nanofiltration und schließlich einer Umkehrosmose unterworfen wird, **dadurch gekennzeichnet, dass** man in einem ersten Schritt das Abwasser zumindest zwei bis drei Monate lang absetzen lässt und dass man das gereinigte Abwasser einer Oxidation, vorzugsweise einer UV-Wasserstoffperoxid-Oxidation, unterwirft.

2. Verfahren nach Anspruch 1, **dadurch gekennzeichnet, dass** man das Abwasser nach der Ultra- oder Nanofiltration oder nach der Umkehrosmose in einem Anaerob-Reaktor behandelt, um niedermolekulare Substanzen, die die Umkehrosmose passieren können, abzubauen.

3. Verfahren nach Anspruch 1 oder 2, **dadurch gekennzeichnet, dass** man das Abwasser nach der Umkehrosmose auf über 65° erhitzt, um z.B. Methanol auszutreiben.

4. Verfahren nach Anspruch 3, **dadurch gekennzeichnet, dass** man nach dem Erhitzen auf über 65° das Abwasser auf über 78° erhitzt, um z.B. Ethanol auszutreiben.

5. Verfahren nach einem der Ansprüche 1 bis 4, **dadurch gekennzeichnet, dass** man das Retentat der Ultra- oder Nanofiltration einer Hochdruck-Umkehrosmose unterwirft und das Retentat der Hochdruck-Umkehrosmose in einem Evaporationsbecken eindickt.

## Claims

1. A method for cleaning waste water from olive-oil production, in which the waste water is subjected to flocculation, preferably by means of Ca(OH)₂, subsequently to ultra- or nano-filtration and finally to reverse osmosis, **characterised in that** in a first step the waste water is allowed to settle for at least two to three months, and the cleaned waste water is subjected to oxidation, preferably UV hydrogen peroxide oxidation.

2. A method according to claim 1, **characterised in that** the waste water is treated after the ultra- or nano-filtration or after the reverse osmosis in an anaerobic reactor in order to break down low-molecular substances that can pass through the reverse osmosis.

3. A method according to claim 1 or 2, **characterised in that** the waste water is heated after the reverse osmosis to over 65° in order to expel, for example, methanol.

4. A method according to claim 3, **characterised in that** after having been heated to over 65° the waste water is heated to over 78° in order to expel, for example, ethanol.

5. A method according to one of claims 1 to 4, **characterised in that** the retentate of the ultra- or nano-filtration is subjected to high-pressure reverse osmosis, and the retentate of the high-pressure reverse osmosis is concentrated in an evaporation basin.

## Revendications

1. Procédé d'épuration d'eaux usées issues de la production d'huile d'olive, consistant à soumettre lesdites eaux usées à une floculation, de préférence au moyen de Ca(OH)2, puis à les soumettre à une ultra- ou nanofiltration et, enfin, à une osmose inverse, **caractérisé en ce que** l'on soumet lesdites eaux usées, dans une première étape durant au moins deux à trois moins, à une sédimentation et que, suite à l'épuration desdites eaux usées, on soumet celles-ci à une oxydation, préférentiellement à une oxydation aux UV / au peroxyde d'hydrogène.

2. Procédé selon la revendication 1, **caractérisé en ce que**, suite à ladite ultra- ou nanofiltration ou suite à ladite osmose inverse desdites eaux usées, on traite celles-ci dans un réacteur aux conditions anaérobies, pour ainsi dégrader des substances de faible masse moléculaire lesquelles risqueraient de passer à travers ladite osmose inverse.

3. Procédé selon les revendications 1 ou 2, **caractérisé en ce que**, suite à l'osmose inverse desdites eaux usées, on chauffe celles-ci à plus de 65 °C, pour chasser par exemple le méthanol.

4. Procédé selon la revendication 3, **caractérisé en ce qu'**après avoir chauffé lesdites eaux usées à plus de 65 °C, on chauffe celles-ci à plus de 78 °C, pour chasser par exemple l'éthanol.

5. Procédé selon l'une des revendications 1 à 4, **caractérisé en ce que** l'on soumet le rétentat de ladite ultra- ou nanofiltration à une osmose inverse à haute pression et l'on réduit, dans un bassin d'évaporation, le volume du rétentat de ladite osmose inverse à haute pression.
